# EUROPEAN PATENT APPLICATION

(11) **EP 1 617 380 A1**
(43) Date of publication of application: **18.01.2006**
(21) Application number: 05015371.7
(22) Date of filing: 14.07.2005
(51) Int. Cl.: G06T 15/20

(54) **Device for producing shape model**

(30) Priority: 15.07.2004 JP 2004208106
(71) Applicant: FANUC LTD, Minamitsuru-gun, Yamanashi 401-0597 (JP)
(72) Inventor: Nagatsuka, Yoshiharu FANUC Dai3virakaramatsu, Minamitsuru-gun Yamanashi 401-0511 (JP); Kobayashi, Hirohiko, Fujiyoshida-shi Yamanashi 403-0004 (JP)
(74) Representative: Schmidt, Steffen J.

(57) **Abstract**

A device for producing a shape model used for a matching process of an object to be worked in a robot system. The shape-model producing device includes a shape-data obtaining section for obtaining three-dimensional shape data of the object; a viewpoint setting section for setting, in a coordinate system to which the three-dimensional shape data obtained by the shape-data obtaining section belongs, a plurality of virtual viewpoints permitting the object placed in the coordinate system to be observed in directions different from each other; and a shape-model generating section for generating, as a plurality of shape models, a plurality of two-dimensional image data of the object, based on the three-dimensional shape data, the plurality of two-dimensional image data being estimated when the object is observed in the coordinate system from the plurality of virtual viewpoints set by the viewpoint setting section.

## Description

### BACKGROUND OF THE INVENTION

### 1. Field of the Invention

The present invention relates to a visual recognition in a robot system and, in particular, to a device for producing a shape model used for a matching or collating process of an object to be worked.

### 2. Description of the Related Art

It is known that, when a robot executes operations on an object, an actual image of the object input by a visual sensor is collated and matched with a shape model (also referred to as a "taught model") of the object previously stored in the robot, for it to recognize the present position and orientation of the object. For example, when the robot picks irregularly and randomly stacked objects to be worked, such as machine parts, by holding each object by a hand attached to the end of a robot arm, a set of the random objects are detected by a visual sensor (e.g., a camera) and the image data input by the visual sensor is collated with a shape model, so as to identify the object to be held by the hand, and to operate the robot into position and orientation adaptable to the present position and orientation of the object for enabling the hand to hold the object smoothly.

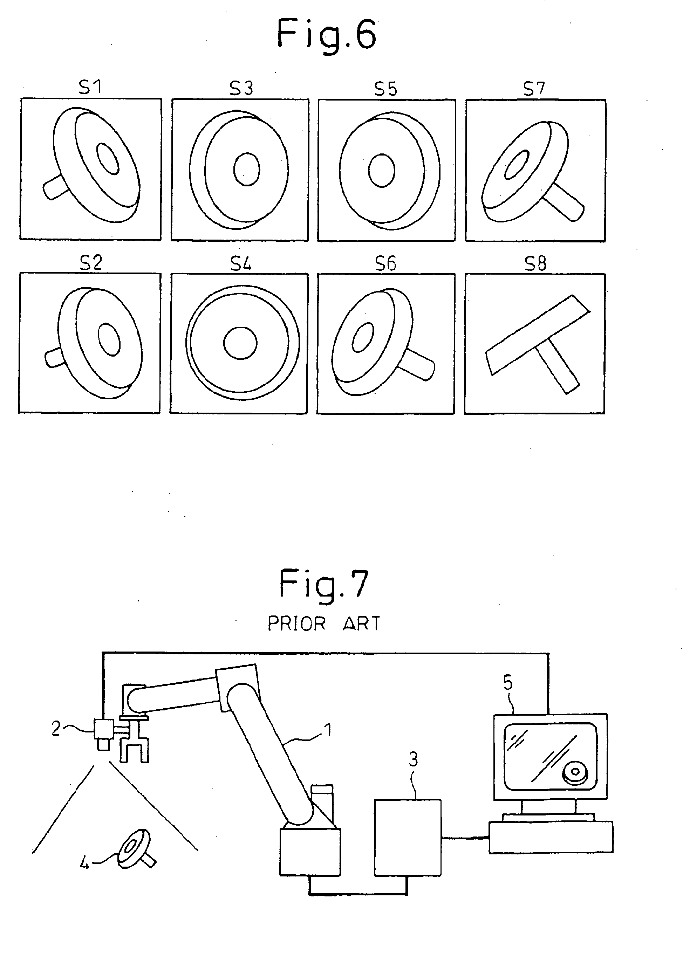

There is a conventional technique for determining a present orientation of an object, wherein a plurality of two-dimensional images obtained by a camera observing the object from a plurality of different viewpoints have been previously stored, as shape models, in a robot controller, and wherein the images of the present object captured by the camera at the time of operation are compared and matched with these shape models. In this connection, as shown in, e.g., Fig. 7, in order to produce the shape models, an image pickup device (or a visual sensor) 2, such as a CCD camera, is attached to the arm end of a robot (or a mechanical section) 1, the robot 1 is operated under the control of a robot controller 3, and the image pickup device 2 is operated to capture an object 4 in several directions different from each other. The several image data of the object 4 obtained by the image pickup device 2 are input to an image processing apparatus 5, and the several two-dimensional image data processed appropriately by the image processing apparatus 5 are stored as, respectively, the shape models obtained by capturing the images of the object 4 from the several directions.

For example, Japanese Unexamined Patent Publication (Kokai) No. 2000-288968 (JP-A-2000-288968) discloses a shape-model producing system as shown in Fig. 7. JP-A-2000-288968 also discloses, as the modification of a shape-model producing process, a technique wherein a camera is fixedly provided at an exterior of a robot, and an object held by a hand of the robot is moved relative to the camera while the several image data obtained by capturing the images of the object by the camera in several directions are stored as shape model data, as well as another technique wherein a camera is attached to one of two robots, and an object held by a hand of the other robot is suitably moved by the robots while the several image data obtained by capturing the images of the objects by the camera in several directions are stored as shape model data.

As described above, in the conventional shape-model producing method, an actual object is prepared for obtaining shape models, a camera or the object is attached to one robot, or alternatively, the camera and the object are attached, respectively, to the two robots, so that the object is captured by the camera in a several directions (or angles) during the operation of a robot, and that the shape models are produced on the basis of the resulted several image data. Therefore, a considerable amount of time (e.g., 20 minutes or more) is taken to produce the shape models and to teach (or store) the latter to the robot.

Further, if it is desired to teach a robot, while performing a specified production work for one object, the shape model of another object, the production work performed by the robot should be stopped temporarily, and thereby the production efficiency may be reduced.

### SUMMARY OF THE INVENTION

It is an object of the present invention to provide a device for producing a shape model used for the matching or collating process of an object to be worked in a robot system, which can produce the shape model quickly and accurately without stopping the operation of the robot.

To accomplish the above object, the present invention provides a shape-model producing device for producing a shape model of an object, comprising a shape-data obtaining section for obtaining three-dimensional shape data of the object; a viewpoint setting section for setting, in a coordinate system to which the three-dimensional shape data obtained by the shape-data obtaining section belongs, a plurality of virtual viewpoints permitting the object placed in the coordinate system to be observed in directions different from each other; and a shape-model generating section for generating, as a plurality of shape models, a plurality of two-dimensional image data of the object, based on the three-dimensional shape data, the plurality of two-dimensional image data being estimated when the object is observed in the coordinate system from the plurality of virtual viewpoints set by the viewpoint setting section.

The shape-model producing device as described above may further comprise a storage section for storing positional data of the plurality of virtual viewpoints set by the viewpoint setting section and the plurality of two-dimensional image data generated by the shape-model generating section in mutually correlative association with each other.

The viewpoint setting section may be configured to set the plurality of virtual viewpoints in a positional relationship such that the virtual viewpoints are rotated, relative to each other, by a predetermined angle about a predetermined axis in the coordinate system.

The shape-model producing device as described above further comprise a display section for displaying, as an image, the plurality of two-dimensional image data generated by the shape-model generating section, in a form of the plurality of shape models.

In this arrangement, the display section may be configured to display, as an image, the object placed in the coordinate system and a reference virtual viewpoint among the plurality of virtual viewpoints set by the viewpoint setting section, in a relative positional relationship as set by the viewpoint setting section.

### BRIEF DESCRIPTION OF THE DRAWINGS

The above and other objects, features and advantages of the present invention will be more apparent from the following description of the preferred embodiments in conjunction with the accompanying drawings, in which:
Fig. 1 is a functional block diagram showing a basic configuration of a shape-model producing device according to the present invention;
Fig. 2 is a functional block diagram showing a configuration of a shape-model producing device according to an embodiment of the present invention;
Fig. 3 is a front view schematically showing an external appearance of the shape-model producing device of Fig. 2;
Fig. 4 is a flow chart showing a model producing procedure in the shape-model producing device of Fig. 2;
Fig. 5 is a flow chart showing a displaying procedure in the shape-model producing device of Fig. 2;
Fig. 6 is a diagram showing an example of two-dimensional images of several shape models, obtained in the shape-model producing device of Fig. 2; and
Fig. 7 is a diagram schematically showing a conventional shape-model producing system.

### DETAILED DESCRIPTION

The embodiments of the present invention are described below in detail, with reference to the accompanying drawings. In the drawings, the same or similar components are denoted by common reference numerals.

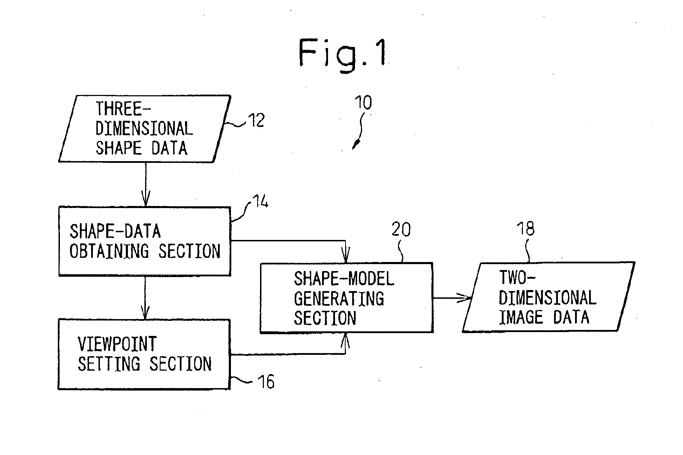

Referring to the drawings, Fig. 1 shows, by a block diagram, a basic configuration of a shape-model producing device 10 according to the present invention. The shape-model producing device 10 includes a shape-data obtaining section 14 for obtaining three-dimensional shape data 12 of an object to be worked (not shown); a viewpoint setting section 16 for setting, in a predetermined coordinate system to which the three-dimensional shape data 12 obtained by the shape-data obtaining section 14 belongs, a plurality of virtual viewpoints (not shown) permitting the object placed at a certain position in the predetermined coordinate system to be observed in directions different from each other; and a shape-model generating section 20 for generating, as a plurality of shape models, a plurality of two-dimensional image data 18 of the object, based on the three-dimensional shape data 12, the plurality of two-dimensional image data 18 being estimated when the object is observed in the predetermined coordinate system from the several virtual viewpoints set by the viewpoint setting section 16.

The shape-model producing device 10 according to the present invention may have a hardware configuration, such as a personal computer or a UNIX® machine, and, for example, a CPU (Central Processing Unit) of the hardware configuration may function as the shape-data obtaining section 14, the viewpoint setting section 16 and the shape-model generating section 20 to produce the two-dimensional image data 18 based on the three-dimensional shape data 12 created by a CAD (Computer-Aided Design) and the like. In accordance with the shape-model producing device 10 configured as described above, it is possible to automatically produce a shape model used for the matching or collating process of the object to be worked in a robot system without actually using a robot. Therefore, in comparison with the conventional art in which the shape model is produced from the image data of the object obtained actually while the robot and a visual sensor are operated, it is possible to produce the shape model more quickly and accurately and, moreover, even when the robot is in operation, it is possible to produce and store another shape model without stopping the operation of the robot. When the object to be worked by the robot is changed, it is possible to smoothly proceed to a work for a new object, and thus to improve working efficiency.

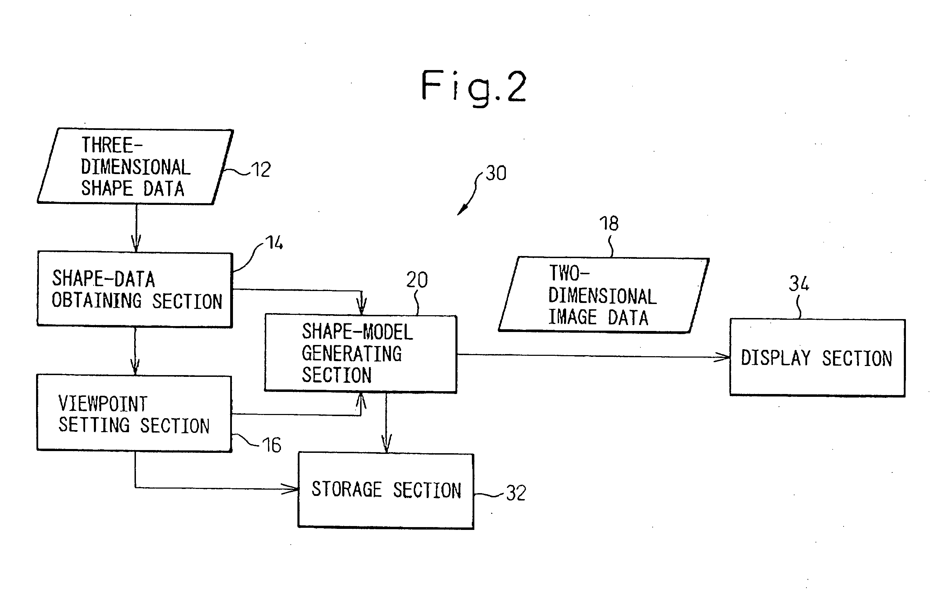

Fig. 2 shows, as a block diagram, a configuration of a shape-model producing device 30 according to an embodiment of the present invention. The shape-model producing device 30 has a basic configuration of the shape-model producing device 10 shown in Fig. 1 and, therefore, corresponding components are denoted by like reference numerals and a description thereof is not repeated.

The shape-model producing device 30 further includes a storage section 32 for storing positional data of the plurality of virtual viewpoints (not shown) set by the viewpoint setting section 16 and the plurality of two-dimensional image data 18 generated by the shape-model generating section 20 in mutually correlative association with each other. In addition, the shape-model producing device 30 further includes a display section 34 for displaying, as an image, the plurality of two-dimensional image data 18 generated by the shape-model generating section 20, in a form of the plurality of shape models. The display section 34 may also display, as an image, the object placed in the coordinate system to which the three-dimensional shape data 12 belongs and a reference virtual viewpoint among the plurality of virtual viewpoints set by the viewpoint setting section 16, in a relative positional relationship as set by the viewpoint setting section 16.

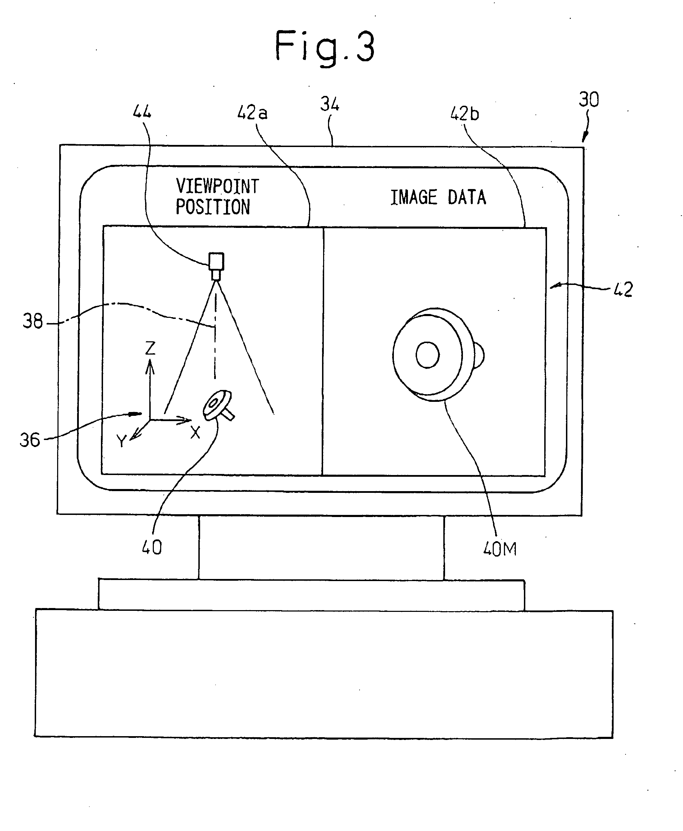

Now, with reference to Figs. 3 to 6, the configuration of the shape-model producing device 30 will be described in more detail.

The shape-model producing device 30 shown in Fig. 3 has a hardware configuration (not shown) of a personal computer and, more specifically, includes a CPU (corresponding to the shape-data obtaining section 14, the viewpoint setting section 16 and the shape-model generating section 20), a memory (corresponding to the storage section 32), a display unit (corresponding to the display section 34), a manual input unit such as a keyboard or a mouse, an interface for external storage media such as a memory card, and a communication interface for peripheral devices such as a robot controller or other computers.

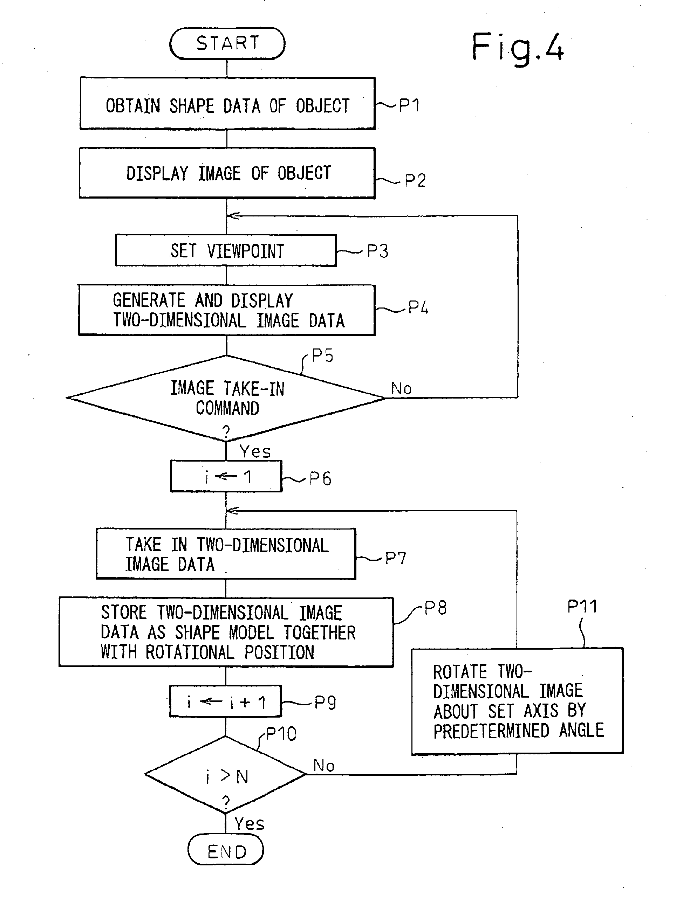

Fig. 4 shows a model producing procedure in the shape-model producing device 30. There will be described, by way of example, a technique for generating a shape model, in which the viewpoint setting section 16 (Fig. 2) is configured to set the plurality of virtual viewpoints in a positional relationship such that the virtual viewpoints are rotated, relative to each other, by a predetermined angle about a predetermined axis 38 (Fig. 3) in a coordinate system 36 (Fig. 3) to which the three-dimensional shape data 12 (Fig. 2) belongs.

First, the CPU of the shape-model producing device 30 obtains three-dimensional shape data 12 (Fig. 2) of an object to be worked, such as a machine part, created by a CAD, from an external storage media or a CAD machine (not shown) through the communication interface (step P1). In this connection, if the three-dimensional shape data created by CAD does not exist, the three-dimensional shape data of the object is directly input to the shape-model producing device 30.

Next, based on the three-dimensional shape data 12 as obtained, the CPU displays an image 40 of the object on a screen 42 of the display unit 34 (step P2). In the illustrated embodiment, the coordinate system 36 to which the three-dimensional shape data 12 belongs as well as the image 40 of the object observed in a predetermined direction are displayed on a window 42a, which is one of the halves of the screen 42 of the display unit 34, so that they can be preferably used for setting the virtual viewpoints. On the other hand, as will be explained later, an image 40M of the object, expected when the object is observed from a virtual viewpoint set in the coordinate system 36, is displayed on a window 42b, which is the other of the halves of the screen 42 of the display unit 34. In this arrangement, the CPU converts the three-dimensional shape data 12 of the object into the two-dimensional image data 18 estimated when the object is observed from the virtual viewpoint and displays it on the screen 42.

Next, an operator sets a reference virtual viewpoint 44 among the plurality of virtual viewpoints for the observation of the object, at a certain position in the coordinate system 36 to which the three-dimensional shape data 12 of the object belongs (step P3). Once the reference virtual viewpoint 44 is set, the CPU instructs to display the position of the reference virtual viewpoint 44 on the window 42a of the screen 42 of the display unit 34, generates the two-dimensional image data 18 of the object, estimated when the object is observed from the reference virtual viewpoint 44, on the basis of the three-dimensional shape data 12, and instructs to display the two-dimensional image 40M of the object on the window 42b of the screen 42 of the display unit 34 (step P4). Then, the CPU judges whether an image take-in command has been input by the operator (step P5) and, if it has not been input, the CPU returns to step P3 to repeatedly proceed steps P3 to P5. When the position of the reference virtual viewpoint 44 is set optimally, the operator inputs the image take-in command.

Once the image take-in command is input, the CPU sets an index "i" to 1 (step P6) and takes-in or captures the two-dimensional image data 18 of the two-dimensional image 40M displayed on the window 42b at that moment (step P7). Then, the CPU stores the captured two-dimensional image data 18, as one shape model, in a memory such as a non-volatile RAM (step P8). In this connection, the two-dimensional image data 18 is stored in the memory along with rotational position data (an initial value = 0) of the reference virtual viewpoint 44 about the axis 38, which represents a direction for observing the object from the reference virtual viewpoint 44.

Next, the CPU increases the index "i" by an increment "1" (step P9) and, then, judges whether the index "i" exceeds a set value N (step P10). If the index "i" does not exceed the set value N, the CPU processes to rotate the image 40 of the object about the axis 38 set in the coordinate system 36 by a predetermined angle (step P11). As a result, the next virtual viewpoint, having a positional relationship with the reference virtual viewpoint 44 such that the virtual viewpoint is rotated about the axis 38 set in the coordinate system 36 by the predetermined angle from the reference virtual viewpoint 44, is set, and the two-dimensional image data 18 (Fig. 2) expected when the object is observed from the next virtual viewpoint is generated.

Then, the CPU returns to step P7 to take-in or capture the two-dimensional image data 18 of the object observed from the next virtual viewpoint after rotation, and, in step P8, stores the two-dimensional image data 18, as a shape model, in a memory along with rotational position data representing the direction for observing the object from the next virtual viewpoint. Subsequently, until the index "i" exceeds the set value N, the CPU repeatedly proceeds steps P7 to P11, and stores "N" shape models produced when the object is observed in "N" different directions in the memory along with the rotational position data representing the respective observing directions. Then, at an instant when the index "i" exceeds the set value N, the shape model producing process is completed.

In this connection, when the CPU returns to step P7 to take-in or capture the two-dimensional image data 18 at the next virtual viewpoint, the CPU may indicate to display the two-dimensional image 40M at that moment on the window 42b of the screen 42 and simultaneously indicate to display the positional relationship (i.e., the rotation angle about the axis 38) between the next virtual viewpoint and the image 40 of the object on the window 42a. In this arrangement, the procedure may be configured to proceed to step P8 only after a command, such as acknowledgment, is input by the operator, so that the operator can conduct operations while checking the respective shape models one by one.

Fig. 6 shows an example of two-dimensional images of a plurality of shape models produced in accordance with the shape model producing process flow described above. In this example, in which N = 8, the two-dimensional images of the eight shape models S1 to S8 produced by rotating, by every 15 degrees, the image 40 of the object about the axis 38 parallel to the Z-axis of the coordinate system 36, on the window 42a of the screen 42 (Fig. 3) of the display unit 34. In this connection, although the plurality of shape models are produced by rotating the image 40 of the object in the above embodiment, the other procedure may be adopted such that the image 40 of the object is fixed while the virtual viewpoint is rotated about a predetermined axis. Further, the axis 38 acting as a center of rotation may be selected to be parallel to the X or Y axis of the coordinate system 36. In other words, the positional relationship between the object and the plurality of virtual viewpoints for observing the object in the different directions is a relative one and, therefore, either one or both of the object and the virtual viewpoints may be suitably moved so as to produce the plurality of shape models.

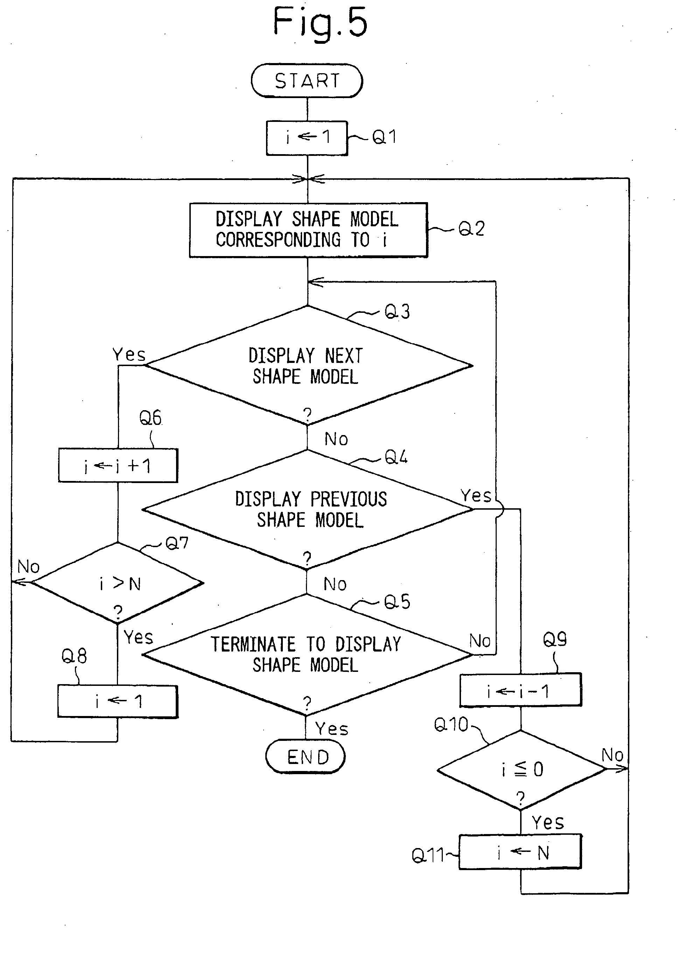

The plurality of shape models produced as described above can be read out from the memory and displayed on the screen 42 of the display unit 34 when the operator wishes to check the shape models. Fig. 5 shows a displaying procedure in the shape-model producing device 30.

Once the operator inputs a shape-model displaying command, the CPU sets the index "i" to 1 (step Q1) and indicates to display a shape model Si corresponding to the index "i" on the window 42b of the screen 42 (step Q2). Concurrently, the correlation in terms of position and orientation between the object and the virtual viewpoint at that moment is displayed on the window 42a of the screen 42. Then, the CPU successively judges whether a displaying command for a shape model produced next to the shape model Si is input (step Q3), whether a displaying command for a shape model produced before the shape model Si is input (step Q4), and whether a shape-model display terminating command is input (step Q5).

If the displaying command for the next shape model is judged to be input in step Q3, the CPU increases the index "i" by an increment "1" (step Q6), and judges whether the value of the index "i" exceeds the number N of the shape models (step Q7). If "i" does not exceed N, the CPU returns to step Q2 and indicates to display the shape model Si indicated by this index "i". On the other hand, if the value of the index "i" exceeds the number N of the shape models, the CPU sets the index "i" to "1" (step Q8) and proceeds to step Q2.

If the displaying command for the previous shape model is judged to be input in step Q4, the CPU decreases the index "i" by a decrement "1" (step Q9), and judges whether the value of the index "i" is equal to or less than 0 (step Q10). If "i" is more than 0, the CPU returns to step Q2 and indicates to display the shape model Si indicated by this index "i". On the other hand, if the index "i" is equal to or less than 0, the CPU sets the index "i" to the number N of the shape models (step Q11) and proceeds to step Q2.

If the shape-model display terminating command is judged to be input in step Q5, the CPU terminates the displaying procedure. In this manner, it is possible for the operator to direct the plurality of shape models S1 to S8 shown in Fig. 6 to be displayed successively on the screen 42 of the display unit 34, so as to check the respective shape models.

The plurality of shape models, produced according to the above-described procedure, are stored, through a communication interface and the like, into a non-volatile memory of an image processing apparatus (not shown) connected to a robot controller (not shown). When the robot executes operations, the image processing apparatus performs an image processing such that an input image obtained by capturing an actual object by a visual sensor (not shown), such as a CCD camera, is compared and matched with the shape models, to recognize an orientation (and a position if required) of the object.

It should be noted that, as the number of shape models produced for one object increases, the accuracy in detecting the object is improved, but the detection time may increase. Therefore, it is desirable to decide the number of produced shape models, in accordance with the shape of the object, the time acceptable for a working process for the object, and the like.

While the invention has been described with reference to specific preferred embodiments, it will be understood by those skilled in the art that various changes and modifications may be made thereto without departing from the spirit and scope of the following claims.

## Claims

1. A device for producing a shape model of an object, comprising:
a shape-data obtaining section (14) for obtaining three-dimensional shape data (12) of the object;
a viewpoint setting section (16) for setting, in a coordinate system (36) to which said three-dimensional shape data obtained by said shape-data obtaining section belongs, a plurality of virtual viewpoints permitting the object placed in said coordinate system to be observed in directions different from each other; and
a shape-model generating section (20) for generating, as a plurality of shape models, a plurality of two-dimensional image data (18) of the object, based on said three-dimensional shape data, said plurality of two-dimensional image data being estimated when the object is observed in said coordinate system from said plurality of virtual viewpoints set by said viewpoint setting section.

2. A shape-model producing device as set forth in claim 1, further comprising a storage section (32) for storing positional data of said plurality of virtual viewpoints set by said viewpoint setting section and said plurality of two-dimensional image data generated by said shape-model generating section in mutually correlative association with each other.

3. A shape-model producing device as set forth in claim 1, wherein said viewpoint setting section is configured to set said plurality of virtual viewpoints in a positional relationship such that said virtual viewpoints are rotated, relative to each other, by a predetermined angle about a predetermined axis (38) in said coordinate system.

4. A shape-model producing device as set forth in any one of claims 1 to 3, further comprising a display section (34) for displaying, as an image, said plurality of two-dimensional image data generated by said shape-model generating section, in a form of said plurality of shape models.

5. A shape-model producing device as set forth in claim 4, wherein said display section is configured to display, as an image, the object placed in said coordinate system and a reference virtual viewpoint (44) among said plurality of virtual viewpoints set by said viewpoint setting section, in a relative positional relationship as set by said viewpoint setting section.
